## Europäisches Patentamt
## European Patent Office
## Office européen des brevets

(11) Publication number: **0 227 622**
**B1**

(12) # EUROPEAN PATENT SPECIFICATION

(45) Date of publication of patent specification: **11.10.89**

(51) Int. Cl.⁴: **F 42 C 1/14, F 42 B 13/10, F 16 B 21/16, F 16 B 21/10**

(21) Application number: **86850422.6**

(22) Date of filing: **04.12.86**

(54) Locking unit for a movable distance device.

(30) Priority: **16.12.85 SE 8505937**

(43) Date of publication of application:
**01.07.87 Bulletin 87/27**

(45) Publication of the grant of the patent:
**11.10.89 Bulletin 89/41**

(84) Designated Contracting States:
**DE FR GB**

(56) References cited:
**FR-A-1 218 767**
**FR-A-1 546 856**
**FR-A-1 600 097**
**GB-A- 649 940**
**GB-A- 957 041**
**GB-A-2 094 392**

(73) Proprietor: **Affärsverket FFV**
**S-631 87 Eskilstuna (SE)**

(72) Inventor: **Sundvall, Kenneth**
**Pl 812**
**S-635 20 Eskilstuna (SE)**

(74) Representative: **Hedefält, Dag et al**
**Försvarets Civilförvaltning Patentenheten**
**Östermalmsgatan 87 Box 80012**
**S-104 50 Stockholm (SE)**

Courier Press, Leamington Spa, England.

## Description

### Technical Field

The present invention refers to distance devices, which are used together with shells, principally of the hollow charge type, in order to achieve a certain distance (stand-off) between the point where the ignition of the explosive charge is effected and the target.

When using shells of the burster type the distance aims at achieving detonation before hitting the ground or before striking the target. When using shells of the hollow charge type the distance aims at achieving a fully developed hollow charge jet.

### Background Art

Accordingly when using hollow charged shells it is important that the hollow charge jet is given the opportunity to be fully developed in order to attain an optimal effect in the target. This is achieved by causing the charge to ignite at a certain distance before the shell reaches the target. The theoretical optimum of the distance is 6—8 calibres which at a calibre of 15 cm should correspond to a distance of maximum 120 cm. From a ballistic point of view one can not tolerate distance devices that long, but the choice of their length is chosen with respect to the practical use, the ballistical properties and the optimal development of the hollow charge jet. The ignition system is preferably electromechanic which causes that parts of the electric ignition system must be placed a short distance in front of the charge, i.e. in the front end of the distance device.

A disadvantage about existing distance fuse devices is that they can not be made long enough without being practically cumbrous in the field.

It has previously been suggested that a distance device should be designed telescopically so that the device should be protruded in several sections to its full length just as the shell has left the barrel. The disadvantages of such a layout are that the design is too heavy in consideration of its function and practical use. Besides, this construction is too complicated concerning the locking of the sections and the layout of the electrical system in the distance device. An example of a simple section telescoping device in the same technical field and for the same purpose is disclosed by FR—A—1 218 767.

### The Purpose of the Invention

The purpose of the present invention is to eliminate the disadvantages previously mentioned and to produce a manually operated locking mechanism for a movable distance device for the fuse of a shell e.g. of the hollow charge type.

### Summary of the Invention

The purpose mentioned above is achieved by the characteristics of the device as presented in the attached claims. In the following, a distance device means the device arranged in front of and in connection with the front casing or the cover of the shell possibly as a part of the fuse of the shell. The invention relates to a distance device shaped as a cylindrical tube which can telescope into the outer casing of the shell in order to minimize the total length of the shell during transport. When the shell is being primed the tube is pulled out of the outer casing and is locked to the outer casing.

The locking mechanism according to the invention is less susceptible to accidental operation as the one disclosed by FR—A—1 218 767. It causes the distance device to be locked momentary against every movement in relation to the rest of the body of the shell caused by the handling or the use of the shell. The mechanism can also be unlocked after a former locking.

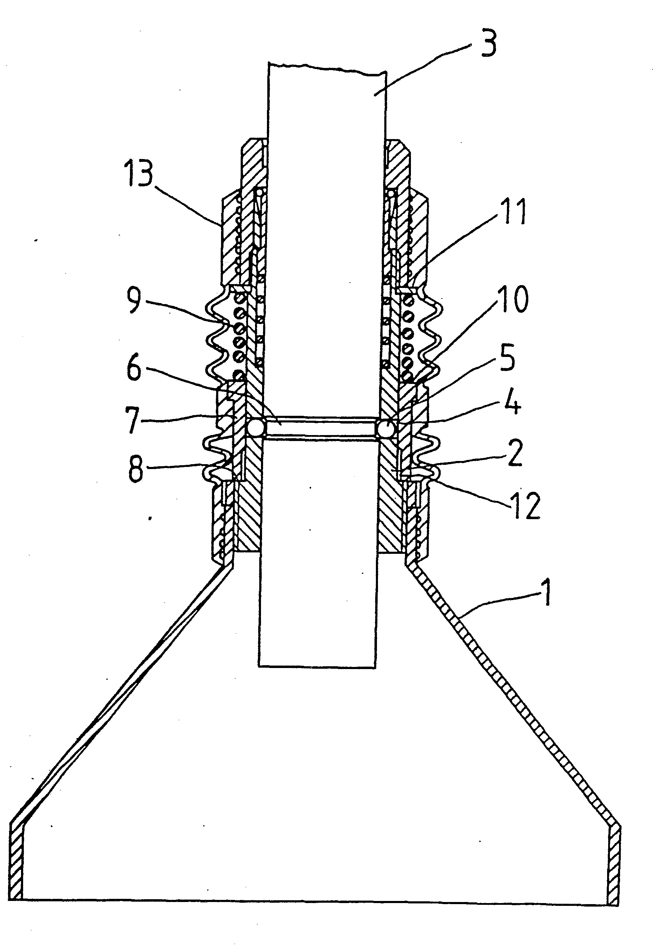

### Brief Description of the Drawing

The invention will now be further described by working examples with numerals referring to the relevant parts of the drawing.

The figure shows a cross section through an electromechanic fuse provided with an axially movable distance device in its originally locked position.

### Description of Embodiments

The fuse according to the figure is built up by an outer casing 1 in which a guide tube 2 is arranged. In the guide tube 2 a cylindrically shaped and axially moveable distance device 3 is lodged to slide. Through the guide tube 2 a number of holes 4 is radially arranged and at equal distance from the rear end of the guide tube 2. In each hole 4 a locking body 5 is disposed, preferably in the shape of a ball. Around its periphery the distance device 3 is arranged with at least one groove 6 into which the locking bodies 5 can be pushed if the groove 6 coincides with the holes 4 in the guide tube 2. Mounted on the outer surface of the guide tube 2 in the area around the holes 4 an axially moveable blocking ring 7 is arranged which is forced backwards by a compression spring 9 against a collar 8 on the guide tube 2. The compression spring 9 acts between the front surface 10 of the blocking ring 7 and a lock-ring 11 arranged in a groove in the front part of the guide tube 2. Further, the blocking ring 7 is shaped with a front internal diameter which principally coincides with the outer diameter of the guide tube 2 in the area of the guide tube 2 where the holes 4 are disposed. Besides, the blocking ring 7 is shaped with a rear internal diameter which mainly coincides with the added diameter of the distance device 3 and the two balls 4. Around the outer casing 1, the blocking ring 7, the compression spring 9 and the lock-ring 11 a pair of bellows 13 is mounted in order to make a seal against the outer casing 1 and directly or indirectly against the guide tube 2 so that for instance gravel does not come into the locking mechanism. The pair of bellows 13 is furthermore internally disposed with a collar laying against a corresponding collar on the outer surface of the blocking ring so that a manual operation of the blocking ring 7 from its rear position could be made with the pair of bellows 13. Consequently, besides for its preventing purpose the pair of bellows 13 is also used to operate the blocking ring 7 so that the mechanism can be unlocked if after an earlier locking one wishes to displace the distance device 3 again. This is achieved by a displacement of the blocking ring 7 upwards so that the locking bodies 5 are released from their locking position in the groove 6 of the distance device 3 whereby the distance device can be displaced either upwards or downwards.

The way this locking mechanism functions is that the distance device 3 is manually pulled out before the loading of the shell until the locking bodies 5 are snapped into the groove 6 of the distance device 3. Before such a locking of the distance device 3 is made the blocking ring is carried forwards so that its cavity 12 is just opposite the holes 4 of the guide tube. This means that the locking bodies 5 are forced out from the groove 6 when the distance device 3 is axially displaced.

By this means the distance device can be provided with two grooves of which the first groove locks the distance device in its innermost position and the second groove locks the distance device in its outermost position.

Further embodiments can be obtained within the scope of the claims. The blocking ring, the groove, the cavity can be varied in shape. Besides, the locking bodies can be varied, e.g. balls, cylinders etc. The compression spring can for instance be replaced by a leaf spring or a cup spring.

## Claims

1. Locking unit for a movable distance device (3) used together with a projectile wherein the distance device (3) is cylindrically formed and axially movable in a guide tube (2) in the front part of the projectile characterised in that through the guide tube (2) a number of holes (4) is radially arranged in order to contain locking bodies (5) and that a blocking ring (7) with a front internal diameter principally corresponding to the outer diameter of the guide tube (2) and with a rear internal diameter greater than its front internal diameter arranged to block the locking bodies (5) radially in a first position and to release the locking bodies (5) radially in a second position and that the blocking ring (7) is backwardly influenced by force and slideably mounted on the guide tube for operation of the locking bodies (5) in and out of engagement with at least one groove (6) arranged in the distance device (3).

2. Locking unit as in claim 1, characterized in that the rear diameter of the blocking ring (7) principally corresponds to the added diameters of the distance device and two locking bodies.

3. Locking unit as in claim 1, characterized in that the operation of the blocking ring (7) is managed with a pair of bellows (13) mounted on the outside of the blocking ring (7) which pair of bellows in one end is sealingly in contact with an outer surface of an outer casing (1) mounted around the guide tube (2) and in the other end is sealingly in contact with the front outer surface of the guide tube (2).

4. Locking unit as in claim 3, characterized in that the pair of bellows (13) is internally disposed with a collar cooperating with a corresponding collar on the outer surface of the blocking ring (7) in order to operate the blocking ring (7) through the pair of bellows (13).

5. Locking unit as in any of the previous claims, characterized in that the locking bodies (5) are shaped as balls.

## Patentansprüche

1. Sperreinheit für eine bewegliche Distanzvorrichtung (3), die zusammen mit einem Geschoß verwendet wird, worin die Distanzvorrichtung (3) zylindrisch geformt und axial in einem Führungsrohr (2) im vorderen Teil des Geschosses beweglich ist, dadurch gekennzeichnet, daß durch das Führungsrohr (2) eine Anzahl von Löchern (4) radial zur Aufnahme von Sperrkörpern (5) angeordnet ist und daß ein Blockierring (7) mit einem vorderen Innendurchmesser, der im wesentlichen dem äußeren Durchmesser des Führungsrohres (2) entspricht, und mit einem rückwärtigen Innendurchmesser, der größer ist als sein vorderer Innendurchmesser so angeordnet ist, um die Sperrkörper (5) radial in einer ersten Stellung zu blockieren und die Sperrkörper (5) radial in einer zweiten Stellung freizugeben, und daß der Blockierring (7) von rückwärts durch eine Kraft beeinflußt und gleitend auf dem Führungsrohr angebracht ist, um die Sperrkörper (5) mit mindestens einer Rille (6), die in der Distanzvorrichtung (3) angeordnet ist, in und außer Eingriff zu bringen.

2. Sperreinheit nach Anspruch 1, dadurch gekennzeichnet, daß der rückwärtige Durchmesser des Blockierringes (7) im wesentlichen der Summe der Durchmesser der Distanzvorrichtung und der beiden Sperrkörper entspricht.

3. Sperreinheit nach Anspruch 1, dadurch gekennzeichnet, daß die Arbeitsweise des Blockierringes (7) mit einem Paar von Bälgen (13) bewirkt wird, die auf der Außenseite des Blockierringes (7) angebracht sind, wobei das Paar von Bälgen an einem Ende dichtschließend mit einer äußeren Oberfläche eines Außengehäuses (1) in Berührung steht, das um das Führungsrohr (2) angebracht ist, und daß das andere Ende dichtschließend mit der vorderen Außenfläche des Führungsrohrs (2) in Berührung steht.

4. Sperreinheit nach Anspruch 3, dadurch gekennzeichnet, daß das Paar von Bälgen (13) innen mit einem Kragen versehen ist, der mit einem entsprechenden Kragen auf der Außenfläche des Blockierringes (7) zusammenwirkt, um den Blockierring (7) durch das Paar von Bälgen (13) zu betätigen.

5. Sperreinheit nach einem der vorhergehenden Ansprüche, dadurch gekennzeichnet, daß die Sperrkörper (5) kugelförmig ausgebildet sind.

## Revendications

1. Bloc de verrouillage pour un dispositif de distanciation mobile (3) utilisé sur un projectile, dans lequel le dispositif de distanciation (3) est réalisé sous une forme cylindrique et peut se déplacer axialement dans un tube de guidage (2) de la partie avant du projectile, bloc de verrouillage caractérisé en ce que dans le tube de guidage (2) sont percés un certain nombre de trous (4) disposés radialement pour contenir des corps de verrouillage (5), et en ce qu'un anneau de blocage (7) présentant un diamètre intérieur avant correspondant essentiellement au diamètre extérieur du tube de guidage (2), et un diamètre intérieur arrière supérieur à son diamètre intérieur avant, est disposé de manière à bloquer les corps de verrouillage (5) radialement dans une première position, et à libérer ces corps de verrouillage (5) radialement dans une seconde position, l'anneau de blocage (7) étant poussé de force vers l'arrière et se montant en glissement sur le tube de guidage pour faire fonctionner les corps de verrouillage (5) pour les amener en contact et les dégager du contact avec au moins une rainure (6) disposés dans le dispositif de distanciation (3).

2. Bloc de verrouillage selon la revendication 1, caractérisé en ce que le diamètre arrière de l'anneau de blocage (7) correspond essentiellement à la somme des diamètres du dispositif de distanciation et de deux corps de verrouillage.

3. Bloc de verrouillage selon la revendication 1, caractérisé en ce que le fonctionnement de l'anneau de blocage (7) est commandé par une paire de soufflets (13) montés sur l'extérieur de l'anneau de blocage (7), cette paire de soufflets étant en contact d'étanchéité, par une extrémité, avec une surface extérieure d'une enveloppe extérieure (1) montée autour d'un tube de guidage (2), et en contact d'étanchéité, par l'autre extrémité, avec la surface extérieure avant du tube de guidage (2).

4. Bloc der verrouillage selon la revendication 3, caractérisé en ce que la paire de soufflets (13) est munie intérieurement d'un collier coopérant avec un collier correspondant formé sur la surface extérieure de l'anneau de blocage (7), de façon qu'on puisse faire fonctionner l'anneau de blocage (7) par la paire de soufflets (13).

5. Bloc de verrouillage selon l'une quelconque des revendications précédentes, caractérisé en ce que les corps de verrouillage (5) sont réalisés sous la forme de billes.